Europäisches Patentamt

European Patent Office

Office européen des brevets

(19)

(11) Publication number: **0 138 497**
**A2**

# EUROPEAN PATENT APPLICATION

(12)

(21) Application number: **84306691.1**

(22) Date of filing: **01.10.84**

(51) Int. Cl.⁴: **B 66 F 19/00**

(30) Priority: **01.10.83 GB 8326345**

(43) Date of publication of application: **24.04.85**
**Bulletin 85/17**

(84) Designated Contracting States: **AT BE CH DE FR GB IT LI LU NL SE**

(71) Applicant: **Chesworth, John, Oulton Farm Rushton Spencer, Macclesfield Cheshire (GB)**
Applicant: **Hill, Terence Anthony, 29 Melksham Close, Macclesfield Cheshire (GB)**
Applicant: **Jones, George H., 6 Lakeside Bosley, Macclesfield Cheshire (GB)**

(72) Inventor: **Jones, George H., 6 Lakeside Bosley, Macclesfield Cheshire (GB)**

(74) Representative: **Lawrence, John Gordon et al, McNeight & Lawrence Regent House Heaton Lane, Stockport, Cheshire SK4 1BS (GB)**

(54) **Lifting and positioning aid.**

(57) There is disclosed a calliper-type lifting device wherein the work engaging parts at the ends of the pivotted levers are adapted for location in a narrow space suiting the aid for the manoeuvering of kerbstones, paving flags, building blocks or the like.

## LIFTING AND POSITIONING AID

This invention concerns a lifting and positioning aid of the kind (hereinafter termed of the kind referred to) comprising a pair of levers pivotally interconnected at a position intermediate their ends and having work engaging and gripping parts on each of their ends lying to one side of the pivot position and handle means at or adjacent the end of each lever lying to the other side of the pivot position adapted to be lifted by one or two operators to pivot the levers to bring said work engaging and gripping parts to bear on opposite faces of a workpiece to enable it to be lifted, carried and positioned.

Lifting and positioning aids of the kind referred to have been used, for example, in the steel industry for the handling of billets or the like of heated metal. Such aids usually have levers including curved portions terminating in work engaging prongs. Such cannot be used to retrieve or position a workpiece from or at a location closely spaced with respect to similar workpieces, such as a roadside kerbstone or a paving flag, for example.

Roadside kerbstones and paving flagstones, as well as building blocks, especially those of larger sizes, are extremely heavy and difficult to manoeuvre, with the inevitable result that workmen handling them frequently are prone to injury and minor accident.

It is an object of the present invention to provide a lifting and positioning aid of the kind referred to suitable for retrieving or positioning a workpiece from or at a location wherein the workpiece is closely spaced relative to similar workpieces.

According to the present invention there is provided a lifting and positioning aid of the kind referred to characterised in that said work engaging and gripping parts are adapted to be introduced into a narrow opening between closely spaced adjacent workpieces.

By "narrow opening" both here and throughout the specification and claims is meant an opening having a width not greater than the width of the gap customarily provided between adjacent workpieces of the kind to be handled by the aid.

Generally the work engaging and gripping members extend substantially perpendicularly outwardly from said levers, the reflex angles with respect thereto being not greater than 270°.

The handle means may be a single member extending between the ends of the two levers to permit single-handed operation.

Each lever may be in the form of a longitudinally extending beam or in the form of a pair of laterally spaced beams interconnected by transversely extending members.

Preferably said handle means or additional handle means enables the workpiece to be moved to a final position by pulling on one lever to drag the workpiece through the work engaging member on said one lever.

The invention will be further apparent from the following description, with reference to the several figures of the accompanying drawings, which show, by way of example only, three forms of aid embodying the invention.

Of the drawings:-

Figure 1 shows a side view of one form of aid;

Figure 2 shows a plan view of the aid of Figure 1;

Figure 3 shows an end view of the aid of Figure 1;

Figure 4 shows a plan view of a second form of aid;

Figure 5 shows a side view of a third form of aid;

and Figure 6 shows a cross-section through the third form of aid on the line VI-VI of Figure 5.

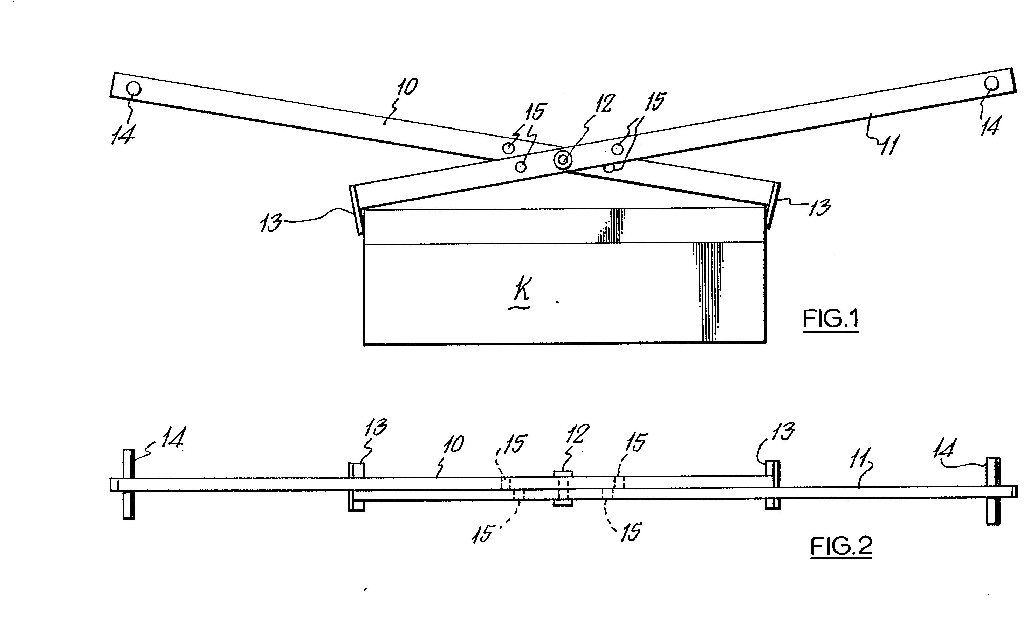

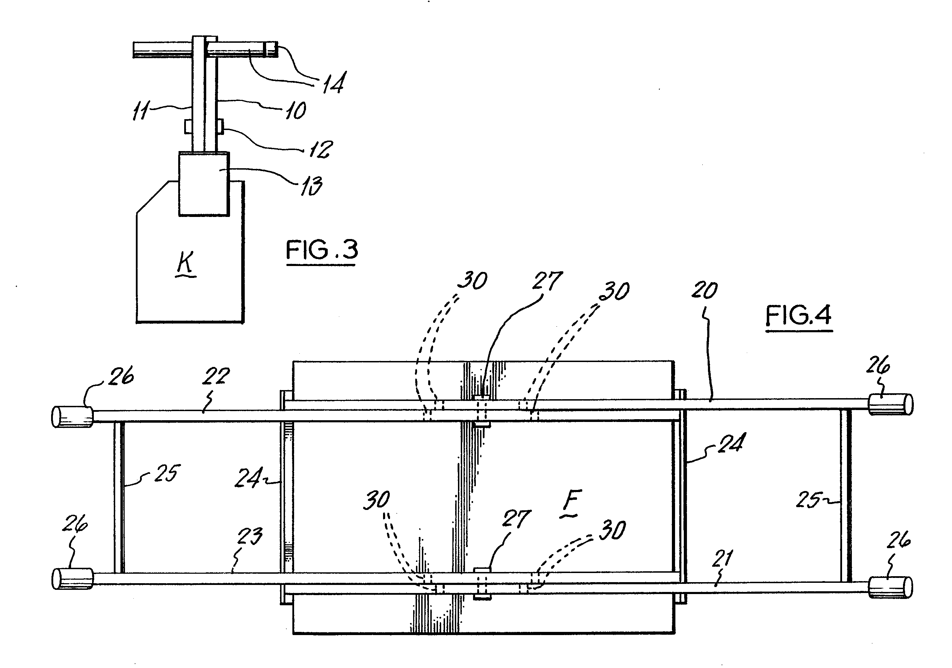

Referring first to Figures 1 to 3, it will be seen that the first form of lifting and positioning aid comprises a pair of levers 10 and 11, each in the form of a longitudinally extending beam, connected for pivoting movement at a position intermediate their ends by a pin 12, passing through bores in the levers 10 and 11. Plates 13 adapted to engage and grip opposite ends of a workpiece such as a roadside kerbstone K for example are secured to the ends of the levers 10 and 11 on one side of the pivot pin 12. The plates 13 extend outwardly from the levers 10 and 11 substantially perpendicularly but such that the reflex angle with respect thereto is not greater than 270°.

Rods 14 forming handle means extend through the levers 10 and 11 at or adjacent their ends on the other side of the pivot pin.

In use two workmen use the aid by positioning the plates 13 against the opposed ends of a kerbstone K and lifting the two handle means 14 to cause the plates 13 to grip the kerbstone enabling it to be raised, carried, lowered and released at a desired position. Final positioning can be effected by pulling a single of the handle means 14 to drag the kerbstone slightly over the ground.

It will be noted that the design of the work engaging plates 13 enables them to be introduced into narrow openings between adjacent kerbstones enabling easy retrieval and accurate positioning.

A series of bores 15 are provided in the levers 10 and 11 and the pin 12 can be located in a selected set to adapt the aid for use in handling kerbstones of different length.

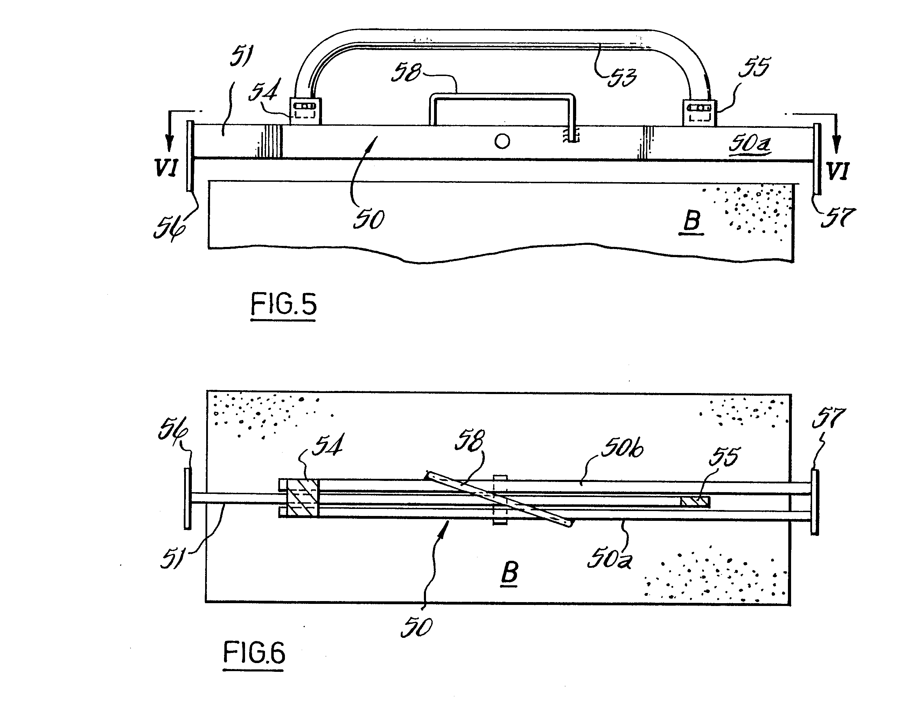

As shown in Figure 4, the second form of aid, which is adapted for the manoeuvering of paving flags F, is modified in that the levers 10 and 11 are replaced by pairs of laterally spaced beams 20,21 and 22,23 respectively. Each pair of beams are connected at one of their ends by a transversely extending work engaging and gripping plate 24 which extends outwardly and substantially perpendicularly from the plane in which the beams lie but such that the reflex angle with respect thereto is not greater than 270°. Each pair of beams are connected adjacent their other ends by a transversely extending bar 25, the ends of the beams lying outwardly from the bar 25 carrying handgrips 26. The two pairs of beams are pivotally interconnected by pins 27 and 28 which can be positioned in different bores 30 to adapt the aid for use with paving flags of different size.

The aid is used as previously described for the first form of aid, but final positioning of a flag can be made by dragging it using one of the bars 25.

The third form of aid shown in Figures 5 and 6 is intended for lifting and positioning building blocks B. Accordingly the levers 50 and 51 are relatively

-7-

short.    The lever 50 is comprised by spaced plates 50a and 50b, whilst the lever 51 is comprised by a single plate pivotally connected to the lever 50 and lying between the plates 50a and 50b.    The handle means is comprised by a single member 53 pivotally connected with and laterally slidable in brackets 54 and 55 at the ends of the levers 50 and 51 remote from the work-engaging and gripping parts 56 and 57 to permit single-handed operation by a bricklayer to lift and position the blocks B whilst his other hand is free to work with his cement trowel.

A hoop 58 extends between the plates 50a and 50b which can be drawn towards the member 53 by the one hand to pivot the levers to move the parts 56 and 57 apart to permit positioning of the aid on a block B.    The hoop 58 can then be released and the member 53 raised to cause the parts 56 and 57 to move inwardly to grip the block B for lifting.

It will be appreciated that it is not intended to limit the invention to the above example only, many variations, such as might readily occur to one skilled in the art, being possible, without departing from the scope thereof as defined by the appended claims.

CLAIMS

1.      A lifting and positioning aid of the kind referred to characterised in that said work engaging and gripping parts are adapted to be introduced into a narrow opening between closely spaced adjacent workpieces.

2.      A lifting and positioning aid according to claim 1 wherein said work engaging and gripping members extend substantially perpendicularly outwardly from said levers, the reflex angles with respect thereto being not greater than 270°.

3.      A lifting and positioning aid according to claim 1 or claim 2 wherein each said lever is in the form of a longitudinally extending beam.

4.      A lifting and positioning aid according to claim 3 wherein said handle means is comprised by a single member pivotally connected with and laterally slidable in brackets at the ends of the beams remote from the work engaging and gripping parts to permit single-handed operation.

0138497

5. A lifting and positioning aid according to claim 4 including further handle means secured to one of said beams and adapted to be drawn towards the first mentioned handle means to cause the beams to pivot to move the work engaging and gripping parts away from one another and released to cause the parts to move towards one another.

6. A lifting and positioning aid according to claim 1 or claim 2 wherein each said lever is in the form of a pair of laterally spaced beams interconnected by at least two transversely extending members.

7. A lifting and positioning aid according to claim 3 or claim 6 so dimensioned as to be adapted for the lifting and positioning of a roadside kerbstone or a paving flagstone.

8. A lifting and positioning aid according to claim 4 or claim 5 so dimensioned as to be adapted for the lifting and positioning of a building block.

9. A lifting and positioning aid according to any preceding claim wherein said handle means or additional handle means enables the workpiece to be moved to a final position by pulling on one lever to drag the workpiece through the work engaging member on said one lever.

10.    A lifting and positioning aid according to any preceding claim wherein the pivot position is adjustable to enable the aid to be suited to workpieces of different size.

10

15    12    15

14    11    14

13    13

K                    FIG.1

14    13    10    15    12    15    13    11    14

15    15

FIG.2

1/3

0138497

FIG.3

FIG.4

0138497

FIG.5

FIG.6